# EUROPÄISCHE PATENTSCHRIFT

(11) **EP 4 299 492 B1**
(45) Veröffentlichungstag und Bekanntmachung des Hinweises auf die Patenterteilung: **18.03.2026**
(21) Anmeldenummer: 22305972.6
(22) Anmeldetag: 01.07.2022
(51) Int. Cl.: B65G 54/02

(54) **TRANSPORTSYSTEM**
TRANSPORT SYSTEM
SYSTÈME DE TRANSPORT

(43) Veröffentlichungstag der Anmeldung: 03.01.2024
(73) Patentinhaber: Schneider Electric Industries SAS, 92500 Rueil-Malmaison (FR)
(72) Erfinder: KEMPF, Johannes, 63920 Großheubach (DE)
(74) Vertreter: Manitz Finsterwald Patent- und Rechtsanwaltspartnerschaft mbB

(56) Entgegenhaltungen:
- DE-A1- 102016 212 227
- DE-B3- 102016 222 806
- US-A1- 2019 009 990
- US-A1- 2021 300 693

## Beschreibung

Die Erfindung betrifft ein Transportsystem, insbesondere ein Multi-Carrier-System, sowie ein Verfahren zum Übergeben eines Transportelements von einer Strecke eines Transportsystems auf eine Nebenstrecke oder auf eine Abstellschiene.

Transportsysteme, das heißt insbesondere Multi-Carrier-Systeme, umfassen vorzugsweise eine Vielzahl von Transportelementen, sogenannte Läufer, Mover oder Carrier, welche durch mehrere entlang einer Führungsbahn oder Strecke angeordnete Linearmotoren bewegt werden. Die Transportelemente sind dabei einzeln und unabhängig voneinander bewegbar, sodass Multi-Carrier-Systeme die Möglichkeit schaffen, flexibel an verschiedene industrielle Prozesse angepasst zu werden und insbesondere auch auf Veränderungen in einem industriellen Prozess flexibel reagieren zu können.

Die Linearmotoren sind üblicherweise mit Schienen versehen, um einerseits die Bewegung der Transportelemente in ihrer Bewegungsrichtung, also entlang der Strecke, zu ermöglichen und zu führen, andererseits aber quer zu der Bewegungsrichtung, das heißt üblicherweise in einer Querrichtung und einer Aufwärts- bzw. Abwärtsrichtung, die Transportelemente mit gewissem Spiel zu fixieren. Diese Fixierung der Transportelemente erschwert jedoch das Hinzufügen oder Entfernen von Transportelementen in das Transportsystem oder aus dem Transportsystem, vor allem, wenn das Transportsystem gerade aktiv in Betrieb ist.

DE 10 2016 212 227 A1 offenbart den Oberbegriff der Ansprüche 1 sowie 8 und zeigt eine Linearantriebsanordnung einer Vorrichtung zum Befüllen von Packmittel, bei der Führungsmittel für einen Läufer vorgesehen sind. Die Vorrichtung offenbart ferner ein Rücktransportsystem auf, das ebenfalls mit Führungsmitteln versehen ist. Der Läufer kann mittels eines Umsetzers vom Rücktransportsystem zur Linearantriebsanordnung umgesetzt werden.

Es ist eine Aufgabe der vorliegenden Erfindung, das Hinzufügen oder Entfernen von Transportelementen in das Transportsystem oder aus dem Transportsystem - insbesondere auch im laufenden Betrieb - zu vereinfachen.

Diese Aufgabe wird durch den Gegenstand der unabhängigen Ansprüche gelöst.

Vorteilhafte Weiterbildungen sind Gegenstand der Unteransprüche und ergeben sich aus der Beschreibung und den Zeichnungen.

Das erfindungsgemäße Transportsystem wird durch Anspruch 1 offenbart.

Bei dem Transportsystem kann es insbesondere auch möglich sein, dass mehrere Transportelemente gleichzeitig durch die Führungsschiene und/oder die Linearmotoren zur Übergabe von der Strecke auf die Nebenstrecke oder auf die Abstellschiene in der zweiten Richtung bewegt werden.

Das Transportsystem, also die Strecke, kann insbesondere umlaufend ausgebildet sein, das heißt die Linearmotoren bilden eine in sich geschlossene Strecke, entlang der die auch als Carrier, Mover oder Läufer bezeichneten Transportelemente theoretisch endlos in derselben Richtung bewegt werden können. Das Transportelement oder die Transportelemente werden dabei insbesondere magnetisch angetrieben. Dazu weisen die Transportelemente einen oder mehrere Permanentmagnete auf, welche mittels eines sich verändernden und/oder wandernden Magnetfelds, welches von den Linearmotoren erzeugt wird, mit einer Antriebskraft beaufschlagt werden. Die Antriebskraft führt zu einer Bewegung der Transportelemente entlang der Führungsbahn. Mittels der Transportelemente können dadurch beispielsweise Werkstücke entlang der Führungsbahn transportiert werden. Auf der Strecke können bevorzugt mehrere Transportelemente gleichzeitig angeordnet sein und insbesondere unabhängig und separat voneinander bewegt werden.

Die Begriffe "erste Richtung", "zweite Richtung" und "dritte Richtung" beziehen sich auf ein mitbewegtes Koordinatensystem eines jeweiligen Transportelements, dessen Koordinatenursprung insbesondere im Schwerpunkt des Transportelements liegen kann. Die erste Richtung entspricht dabei der Bewegungsrichtung des Transportelements. Die zweite Richtung ist als orthogonal zur ersten Richtung definiert, während die nachfolgend noch erwähnte dritte Richtung sowohl zu der ersten Richtung als auch zu der zweiten Richtung orthogonal ist. Die erste, zweite und dritte Richtung entsprechen damit insbesondere den Richtungen der drei Achsen des kartesischen mitbewegten Koordinatensystems. Wenn das Transportelement horizontal bewegt wird, kann die zweite Richtung insbesondere einer Vertikalen entsprechen. Die dritte Richtung entspricht beispielsweise einer Querrichtung des Transportelements und ist dann zu den Linearmotoren oder von diesen weg. Bei dem mitbewegten Koordinatensystem entspricht die erste Richtung beispielsweise der x-Richtung, die zweite Richtung der z-Richtung und die dritte Richtung der y-Richtung.

Die Führungsstruktur bezeichnet insbesondere wie auch immer geartete Ausprägungen der Führungsschiene oder eines Teils davon, welche geeignet sind, auf die Transportelemente dahingehend einzuwirken, dass die Bewegung der Transportelemente entlang der Strecke ermöglicht wird, Bewegungen des Transportelements quer zu der ersten Richtung, also innerhalb einer Ebene, zu der die Bewegungsrichtung eine Normale ist, jedoch unterbunden werden. Dies geschieht, indem entsprechende auf das Transportelement wirkende Kräfte von der Führungsstruktur aufgenommen werden. Die Führungsstruktur kann beispielsweise durch geometrische Ausprägungen wie Nuten, Vorsprünge oder Winkel gebildet sein.

Um insbesondere im laufenden Betrieb das Hinzufügen oder Entfernen von Transportelementen in das Transportsystem oder aus dem Transportsystem heraus zu erleichtern und besser zu automatisieren, ist die Führungsstruktur an der Übergabestelle zumindest teilweise unterbrochen in dem Sinne, dass eine Bewegung des Transportelements in zumindest der zweiten Richtung freigegeben wird. Das Transportelement ist dann also in einer zu der Bewegungsrichtung orthogonalen Richtung, beispielsweise der Vertikalrichtung, bewegbar. Insbesondere kann das Transportelement dann vertikal zu der Führungsschiene bzw. einem Teil davon bewegt werden. Die Bewegung in der zweiten Richtung ist vorteilhaft, um das Transportelement von der Führungsschiene herunterzunehmen, um es beispielsweise auf eine benachbarte Strecke, im Folgenden auch als Nebenstrecke bezeichnet, oder auf eine Abstellschiene übergeben zu können. Andererseits können aufgrund der Unterbrechung der Führungsstruktur auch zusätzliche Transportelemente hinzugefügt, also der Strecke zugeführt, werden.

Die Führungsschiene weist wenigstens eine Hauptführungsschiene zum Aufnehmen von Kräften in der zweiten Richtung mittels der Führungsstruktur und wenigstens eine Übergabeführungsschiene zum Aufnehmen von Kräften in der zweiten Richtung mittels der Führungsstruktur auf, wobei die Führungsstruktur der Hauptführungsschiene an der Übergabestelle unterbrochen ist. Wenn die Führungsschiene, wie in diesem Fall, also mehrere Teilschienen aufweist, die gemeinsam die Führungsstruktur ausbilden, kann es also ausreichend sein, wenn nur die Führungsstruktur einer Teilschiene, hier also der Hauptführungsschiene, unterbrochen ist. Um eine Bewegung des Transportelements in der zweiten Richtung zu ermöglichen, trägt dann die Übergabeführungsschiene zu dieser Bewegung bei, wie später noch weiter ausgeführt wird.

Zumindest eine von der Hauptführungsschiene und der Übergabeführungsschiene kann dazu ausgebildet sein, mittels der Führungsstruktur Kräfte in der zu der ersten Richtung und der zweiten Richtung orthogonalen dritten Richtung aufzunehmen. Insbesondere wenn die dritte Richtung die Querrichtung ist, kann dies dazu beitragen, dass ein seitliches Herausfallen verhindert wird. Dies entspricht einer weiteren Sicherheitsmaßnahme zusätzlich zu der Anziehungskraft des Magnetfelds der Linearmotoren.

Zumindest an der Übergabestelle kann die Übergabeführungsschiene zum Bewegen des Transportelements in der zweiten Richtung verfahrbar oder neigbar sein. Die Übergabeführungsschiene trägt dann zu der Bewegung des Transportelements in der zweiten Richtung bei. Insbesondere kann diese gegebenenfalls vollständig automatisiert werden, sodass ein automatisiertes Entnehmen des Transportelements von der Strecke möglich ist, indem die Übergabeführungsschiene das Transportelement beispielsweise auf ein von der Strecke verschiedenes Niveau anhebt oder von diesem absenkt. Vorzugsweise wird das Transportelement auf ein Niveau gebracht, welches der Nebenstrecke oder der Abstellschiene entspricht, sodass das Transportelement automatisiert auf diese übergeben werden kann.

Das Transportsystem kann insbesondere die an der Übergabestelle angeordnete und durch eine Nebenführungsschiene definierte Nebenstrecke oder die Abstellschiene aufweisen. Die Abstellschiene kann beispielsweise ausgebildet sein, an der Übergabestelle angeordnet oder positioniert zu werden, beispielsweise mittels eines Greifarms.

Die Nebenführungsschiene kann - entsprechend der Übergabeführungsschiene - eine in der zweiten Richtung verfahrbare oder neigbare Aufnahmeführungsschiene aufweisen. Somit ist insbesondere ein "Annehmen" des in der zweiten Richtung bewegten Transportelements möglich. Vorzugsweise können die Übergabeführungsschiene und die Aufnahmeführungsschiene zusammenwirken, sodass die Übergabeführungsschiene das Transportelement "angibt" und die Aufnahmeführungsschiene das Transportelement "annimmt". Insbesondere können hierdurch die Verfahrzeiten der Übergabeführungsschiene verkürzt werden, sodass die Übergabeführungsschiene schneller wieder in ihrer betriebsmäßigen Position ist und eventuell auf der Strecke nachfolgende Transportelemente in die Übergabestelle einfahren oder sie passieren können.

Das Transportelement ist mit Laufelementen versehen ist, die mit der Führungsstruktur zusammenwirken, um die Führung der Transportelemente entlang der Bewegungsrichtung zu bewerkstelligen. Insbesondere können alle Laufelemente eines Transportelements an einer der Führungsschiene zugewandten Seite des Transportelements angeordnet sein, was einer asymmetrischen Ausgestaltung eines Transportelements entspricht.

Das erfindungsgemäße Verfahren gemäss Anspruch 8 dient zum Übergeben eines Transportelements von einer durch eine Führungsschiene eines Transportsystems definierten Strecke auf eine Nebenstrecke oder auf eine Abstellschiene. Das Transportsystem weist mehrere Linearmotoren, die aneinandergereiht angeordnet sind und die Führungsschiene umfassen, und das durch die Linearmotoren in einer ersten Richtung entlang der Strecke bewegbare Transportelement auf. Die Führungsschiene weist eine mit dem Transportelement zusammenwirkende Führungsstruktur zum Führen der Bewegung des Transportelements in der ersten Richtung und zum Aufnehmen von quer zu der ersten Richtung auf das Transportelement wirkenden Kräften auf. Die Führungsstruktur ist an zumindest einer Übergabestelle entlang der Strecke wenigstens teilweise unterbrochen, sodass eine Bewegung des Transportelements in einer zu der ersten Richtung orthogonalen zweiten Richtung freigegeben ist und das Transportelement zur Übergabe von der Strecke auf die Nebenstrecke oder auf die Abstellschiene in der zweiten Richtung bewegbar ist. Die Führungsschiene weist wenigstens eine Hauptführungsschiene zum Aufnehmen von Kräften in der zweiten Richtung mittels der Führungsstruktur und wenigstens eine Übergabeführungsschiene zum Aufnehmen von Kräften in der zweiten Richtung mittels der Führungsstruktur auf, wobei die Führungsstruktur der Hauptführungsschiene an der Übergabestelle unterbrochen ist. Das Verfahren umfasst die Schritte:
- Bewegen des Transportelements in der ersten Richtung an die Übergabestelle und
- Bewegen des Transportelements in der zweiten Richtung zur Übergabe des Transportelements auf die Nebenstrecke oder auf die Abstellschiene.

Das Verfahren sieht also die Übergabe des Transportelements durch Bewegung des Transportelements in der zweiten Richtung vor. Zu diesem Zweck ist die Führungsstruktur zumindest teilweise unterbrochen, sodass die Bewegung des Transportelements erst ermöglicht wird. Dies ermöglicht insbesondere das Entfernen des Transportelements von der Strecke im laufenden Betrieb.

Vorzugsweise wird das Transportelement in der zweiten Richtung durch die Führungsschiene und/oder die Linearmotoren bewegt, sodass insbesondere ein automatisiertes Entfernen des Transportelements möglich ist, ohne dass manuell durch einen Bediener eingegriffen werden muss.

Vorzugsweise ist die Übergabeführungsschiene zumindest an der Übergabestelle in der zweiten Richtung verfahrbar oder neigbar, wobei das Verfahren ferner umfasst, dass die Übergabeführungsschiene zumindest an der Übergabestelle zum Bewegen des Transportelements in der zweiten Richtung verfahren oder geneigt wird. Somit findet eine automatisierte Bewegung in der zweiten Richtung statt, um das Transportelement auf ein Niveau anzuheben oder von diesem abzusenken, das sich von dem Niveau der Strecke unterscheidet.

Das Transportelement kann nach der Bewegung in der zweiten Richtung in der ersten Richtung bewegt werden, um in Führungseingriff mit einer Nebenführungsschiene der Nebenstrecke oder mit der Abstellschiene zu gelangen. Die Bewegung kann beispielsweise durch Linearmotoren der Nebenstrecke oder der Abstellschiene, also magnetisch, oder durch eine anderweitige Krafteinwirkung erfolgen. Dies entspricht also einer zu der Bewegungsrichtung der Strecke parallelen Bewegung, nachdem das Transportelement beispielsweise angehoben oder seitlich versetzt wurde. Dies kann vorteilhaft sein, wenn sich etwa die Abstellschiene zumindest teilweise parallel zu der Strecke erstreckt.

Die Nebenführungsschiene kann eine in der zweiten Richtung verfahrbare oder neigbare Aufnahmeführungsschiene aufweisen, wobei das Verfahren ferner das Verfahren oder Neigen der Aufnahmeführungsschiene zum Übernehmen des Transportelements aufweist. Somit ist insbesondere ein "Annehmen" des in der zweiten Richtung bewegten Transportelements möglich. Vorzugsweise können die Übergabeführungsschiene und die Aufnahmeführungsschiene zusammenwirken, sodass die Übergabeführungsschiene das Transportelement "angibt" und die Aufnahmeführungsschiene das Transportelement "annimmt".

Vorzugsweise wird die Abstellschiene an der Übergabestelle positioniert oder von von der Übergabestelle wegbewegt, insbesondere mittels eines Greifarms. Dabei ist insbesondere denkbar, dass ein Greifarm die Abstellschiene dort, insbesondere parallel zur Strecke, positioniert, dann das Transportelement von der Strecke auf die Abstellschiene übergeben wird und anschließend die Abstellschiene durch den Greifarm wegbewegt wird.

**Im** Übrigen gelten zu dem erfindungsgemäßen Verfahren die zum erfindungsgemäßen Transportsystem getroffenen Aussagen entsprechend.

Nachfolgend wird die Erfindung schematisch und beispielhaft unter Bezugnahme auf die Zeichnungen beschrieben. Darin zeigt:
- Fig. 1: eine Draufsicht auf ein Multi-Carrier-System,
- Fig. 2: eine Querschnittsansicht einer Übergabestelle, an der ein Transportelement von einer Strecke auf eine Nebenstrecke übergeben wird, und
- Fig. 3: eine Querschnittsansicht einer Übergabestelle, an der ein Transportelement von einer Strecke auf eine Abstellschiene übergeben wird.

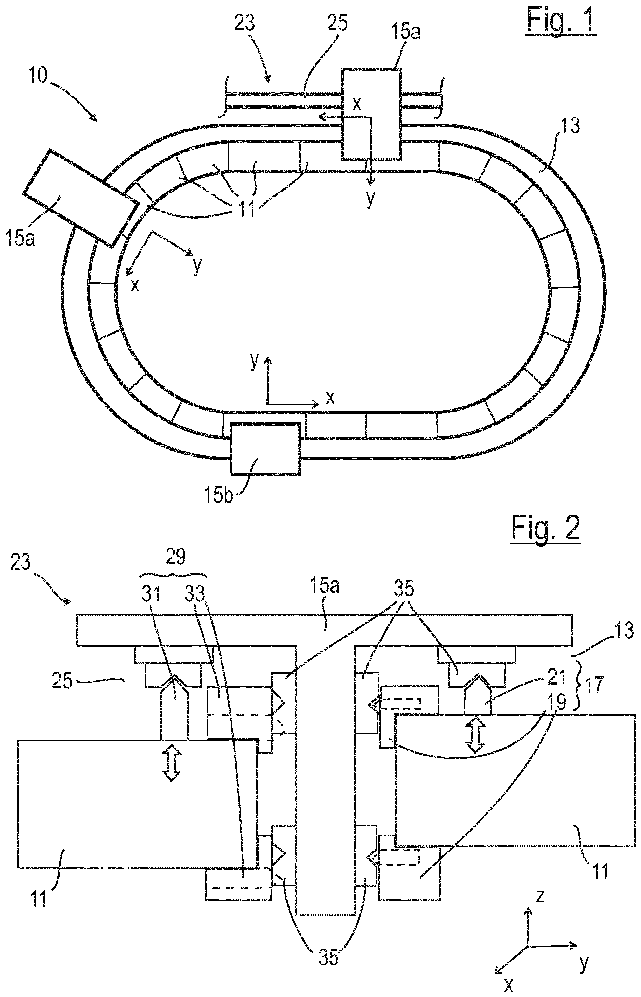

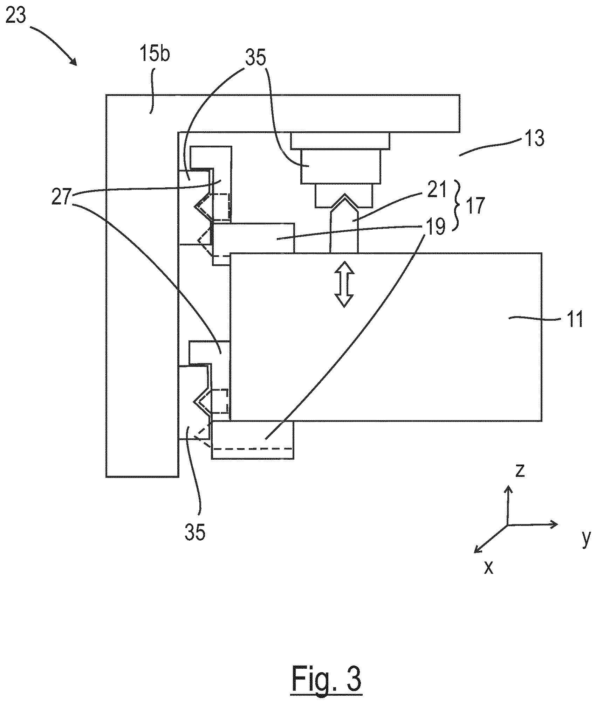

In Fig. 1 ist in Draufsicht ein Transportsystem 10 gezeigt, welches als Multi-Carrier-System ausgebildet ist. Das Transportsystem 10 weist eine Vielzahl von aneinandergereihten Linearmotoren 11 auf, die eine im vorliegenden Beispiel umlaufende Strecke 13 ausbilden. Entlang der Strecke 13 sind in diesem Beispiel drei Carrier oder Transportelemente 15a, 15b angeordnet, die durch die Linearmotoren 11 aufgrund eines sich verändernden oder wandernden Magnetfelds magnetisch angetrieben werden und dadurch unabhängig und separat voneinander bewegt werden können. Zwei Transportelemente 15a sind dabei symmetrisch ausgebildet, wie im Querschnitt in Fig. 2 gezeigt. Das dritte Transportelement 15b hingegen ist asymmetrisch ausgebildet ist, wie im Querschnitt in Fig. 3 gezeigt.

Den Transportelementen 15a, 15b ist in Fig. 1 jeweils ein mitbewegtes Koordinatensystem zugeordnet. Dabei entspricht die x-Richtung der Bewegungsrichtung, also der Richtung eines Geschwindigkeitsvektors des Transportelements 15a, 15b. Die y-Richtung ist eine Querrichtung, orthogonal zur x-Richtung. In den vorliegenden Ausführungsbeispielen liegen die x-Richtung und die y-Richtung in einer horizontalen Ebene. Die z-Richtung ist in den Querschnittsansichten gemäß Fig. 2 und 3 zu erkennen und entspricht der verbleibenden Richtung des kartesischen mitbewegten Koordinatensystems.

Beispielhaft zeigt Fig. 1 außerdem eine Nebenstrecke 25, von der ein Abschnitt gezeigt ist, der benachbart zu einer Übergabestelle 23 der Strecke 13 parallel zu der Strecke 13 verläuft. Die Nebenstrecke 25 ist im Bereich der Übergabestelle 23 so angeordnet, dass die symmetrisch ausgebildeten Transportelemente 15a im vorliegenden Ausführungsbeispiel die Nebenstrecke 25 überdecken, wie auch aus der Querschnittsansicht in Fig. 2 hervorgeht. In dieser ist einerseits rechts ein Linearmotor 11 der Strecke 13 und andererseits links ein weiterer Linearmotor 11 der Nebenstrecke 25 gezeigt. Die Linearmotoren 11 der Strecke 13 sind mit einer Führungsschiene 17 versehen, welche im vorliegenden Ausführungsbeispiel Hauptführungsschienen 19 und eine Übergabeführungsschiene 21 aufweist. Entsprechend sind die Linearmotoren 11 der Nebenstrecke 25 mit einer Nebenführungsschiene 29 versehen, die im vorliegenden Ausführungsbeispiel eine Aufnahmeführungsschiene 31 und Schienen 33 aufweist.

Die Führungsschienen 17, 29 weisen eine in Fig. 2 schematisch angedeutete und teilweise gestrichelt dargestellte Führungsstruktur auf. Als Führungsstruktur werden dabei jene strukturelle Merkmale bezeichnet, welche in Laufelemente 35 des Transportelements 15a eingreifen und derart mit den Laufelementen 35 zusammenwirken, dass das Transportelement 15a in der x-Richtung entlang der Führungsstruktur bewegt werden kann, Kräfte in der y-Richtung und der z-Richtung jedoch durch die Führungsstruktur aufgenommen werden und somit Bewegungen des Transportelements 15a von der Führungsschiene 17, 29 weg unterbunden werden. Das Transportelement 15a wird dadurch sicher an der jeweiligen Führungsschiene 17, 29 gehalten.

Bevor das Transportelement 15a in die Übergabestelle 23 einfährt, wird dieses durch die Führungsstrukturen der Hauptführungsschienen 19 (gestrichelt dargestellt) und der Übergabeführungsschiene 21 geführt. Im Bereich der Übergabestelle 23 ist die Führungsstruktur der Hauptführungsschienen 19 dahingehend unterbrochen, dass die Hauptführungsschienen 19 zwar noch Kräfte in der y-Richtung aufnehmen, nicht mehr jedoch in der z-Richtung. Die Führungsstruktur der Übergabeführungsschiene 21 ist dahingegen nicht unterbrochen. Eine Bewegung des Transportelements 15a in der z-Richtung wird somit möglich.

Wie in Fig. 2 angedeutet, sind die Führungsstrukturen der Schienen 33 der Nebenstrecke 25 ebenfalls im Bereich der Übergabestelle 23 unterbrochen, wohingegen die Führungsstruktur der Aufnahmeführungsschiene 31 nicht unterbrochen ist. Wie außerdem in Fig. 2 angedeutet ist, sind die Schienen 33 und deren Führungsstruktur zu den Hauptführungsschienen 19 vertikal entlang der z-Richtung versetzt. Um das Transportelement 15a von der Strecke 13 auf die Nebenstrecke 25 zu übergeben, muss daher das Transportelement 15a entlang der z-Richtung bewegt werden, sodass die Laufelemente 35 mit der Führungsstruktur der Schienen 33 in Eingriff gebracht werden können. Dies geschieht im vorliegenden Ausführungsbeispiel dadurch, dass die Übergabeführungsschiene 21, wie in Fig. 2 durch einen Pfeil angedeutet, in der z-Richtung verfahren wird, solange bis das Transportelement 15a das Niveau der Nebenstrecke 25 erreicht hat. Geschieht dies nicht, so verbleibt das Transportelement 15a auf der Strecke 13. Zusätzlich oder alternativ ist auch denkbar, dass die Aufnahmeführungsschiene 31 in der z-Richtung verfahren wird. Zudem ist auch denkbar, dass die Schienen 21, 31 nicht verfahren, sondern geneigt werden.

Nachdem das Transportelement 15a das Niveau der Nebenstrecke 25 erreicht hat, kann dieses an die Nebenstrecke 25 übergeben werden, indem seine Laufelemente 35 mit der Nebenführungsschiene 29 in Eingriff gebracht werden. Dies kann insbesondere durch Antreiben durch die Linearmotoren 11 der Nebenstrecke 25 geschehen.

Eine weitere mögliche Anwendung geht aus Fig. 3 hervor, welche anstelle einer Nebenstrecke die Übergabe eines Transportelements 15b an eine Abstellschiene 27 veranschaulicht. Die prinzipielle Funktionsweise entspricht der zuvor geschilderten Funktionsweise, sodass im Folgenden nicht jegliche Details erneut dargelegt werden, sondern nur Abweichendes separat erläutert wird.

Auch in Fig. 3 sind Führungsstrukturen sowohl der Hauptführungsschiene 19 als auch der Abstellschiene 27 außerhalb der Übergabestelle 23 gestrichelt dargestellt. Wie aus Fig. 3 ersichtlich, sind die Führungsstrukturen der Hauptführungsschiene 19 im Bereich der Übergabestelle 23 dahingehend unterbrochen, dass eine Bewegung des Transportelements 15b in der z-Richtung freigegeben wird. In z-Richtung versetzt zu der Hauptführungsschiene 19 ist außerdem die Abstellschiene 27 angeordnet. Durch Verfahren der Übergabeführungsschiene 21 entlang der z-Richtung (durch Pfeil angedeutet) wird das Transportelement 15b angehoben, sodass die Laufelemente 35 mit Führungsstrukturen der Abstellschiene 27 in Eingriff gebracht werden können. Das Transportelement 15b kann dann auf der Abstellschiene 27 "geparkt" werden. Zudem kann die Abstellschiene mittels eines nicht dargestellten Greifarms wie in Fig. 3 gezeigt positioniert oder wegbewegt werden.

Wenn entsprechend der Darstellung in Fig. 3 beide Schienen auf einer Seite angeordnet sind, ist es möglich, ein derartiges asymmetrisches Transportelement 15b vorzusehen, bei dem alle Laufelemente 35 auf derselben Seite des Transportelements 15b angeordnet sind, nämlich auf der der Führungsschiene 17 und der Abstellschiene 27 zugewandten Seite des Transportelements 15b.

### Bezugszeichenliste

- 10: Transportsystem
- 11: Linearmotor
- 13: Strecke
- 15a: Transportelement
- 15b: Transportelement
- 17: Führungsschiene
- 19: Hauptführungsschiene
- 21: Übergabeführungsschiene
- 23: Übergabestelle
- 25: Nebenstrecke
- 27: Abstellschiene
- 29: Nebenführungsschiene
- 31: Aufnahmeführungsschiene
- 33: Schiene
- 35: Laufelement

## Patentansprüche

1. Transportsystem (10), insbesondere Multi-Carrier-System, umfassend mehrere Linearmotoren (11), die aneinandergereiht angeordnet sind und zumindest eine Führungsschiene (17), welche eine Strecke (13) definiert, aufweisen, und
zumindest ein Transportelement (15a, 15b), das durch die Linearmotoren (11) in einer ersten Richtung (x) entlang der Strecke (13) bewegbar ist, wobei die Führungsschiene (17) eine mit dem Transportelement (15a, 15b) zusammenwirkende Führungsstruktur zum Führen der Bewegung des Transportelements (15a, 15b) in der ersten Richtung (x) und zum Aufnehmen von quer zu der ersten Richtung (x) auf das Transportelement (15a, 15b) wirkenden Kräften aufweist,
und
dass die Führungsstruktur an zumindest einer Übergabestelle (23) entlang der Strecke (13) wenigstens teilweise unterbrochen ist, sodass eine Bewegung des Transportelements (15a, 15b) in einer zu der ersten Richtung (x) orthogonalen zweiten Richtung (z) freigegeben ist und das Transportelement (15a, 15b) durch die Führungsschiene (17) und/oder die Linearmotoren (11) zur Übergabe von der Strecke (13) auf eine Nebenstrecke (25) oder auf eine Abstellschiene (27) in der zweiten Richtung (z) bewegbar ist, **dadurch gekennzeichnet, dass** die Führungsschiene (17) wenigstens
eine Hauptführungsschiene (19) zum Aufnehmen von Kräften in der zweiten Richtung (z) mittels der Führungsstruktur und wenigstens eine Übergabeführungsschiene (21) zum Aufnehmen von Kräften in der zweiten Richtung (z) mittels der Führungsstruktur aufweist, wobei die Führungsstruktur der Hauptführungsschiene (19) an der Übergabestelle (23) unterbrochen ist.

2. Transportsystem (10) nach Anspruch 1,
**dadurch gekennzeichnet, dass** zumindest eine von der Hauptführungsschiene (19) und der Übergabeführungsschiene (21) dazu ausgebildet ist, mittels der Führungsstruktur Kräfte in einer zu der ersten Richtung (x) und der zweiten Richtung (z) orthogonalen dritten Richtung (y) aufzunehmen.

3. Transportsystem (10) nach Anspruch 1 oder 2,
**dadurch gekennzeichnet, dass** die Übergabeführungsschiene (21) zumindest an der Übergabestelle (23) zum Bewegen des Transportelements (15a, 15b) in der zweiten Richtung (z) verfahrbar oder neigbar ist.

4. Transportsystem (10) nach einem der vorstehenden Ansprüche,
**gekennzeichnet durch** eine an der Übergabestelle (23) angeordnete und durch eine Nebenführungsschiene (29) definierte Nebenstrecke (25) oder durch eine Abstellschiene (27), die geeignet ist, an der Übergabestelle (23) angeordnet zu werden.

5. Transportsystem (10) nach Anspruch 4,
**dadurch gekennzeichnet, dass** die Abstellschiene (27) geeignet ist, insbesondere mittels eines Greifarms an der Übergabestelle (23) positioniert oder von der Übergabestelle (23) wegbewegt zu werden.

6. Transportsystem (10) nach Anspruch 4 oder 5,
**dadurch gekennzeichnet, dass** die Nebenführungsschiene (29) eine in der zweiten Richtung (z) verfahrbare oder neigbare Aufnahmeführungsschiene (31) aufweist.

7. Transportsystem (10) nach einem der vorstehenden Ansprüche,
**dadurch gekennzeichnet, dass** das Transportelement (15b) mit Laufelementen (35) versehen ist, die mit der Führungsstruktur zusammenwirken, wobei alle Laufelemente (35) an einer der Führungsschiene (17) zugewandten Seite des Transportelements (15b) angeordnet sind.

8. Verfahren zum Übergeben eines Transportelements (15a, 15b) von einer durch eine Führungsschiene (17) eines Transportsystems (10) definierten Strecke (13) auf eine Nebenstrecke (25) oder auf eine Abstellschiene (27), wobei das Transportsystem (10) mehrere Linearmotoren (11), die aneinandergereiht angeordnet sind und die Führungsschiene (17) umfassen, und das durch die Linearmotoren (11) in einer ersten Richtung (x) entlang der Strecke (13) bewegbare Transportelement (15a, 15b) aufweist,
wobei die Führungsschiene (17) eine mit dem Transportelement (15a, 15b) zusammenwirkende Führungsstruktur zum Führen der Bewegung des Transportelements (15a, 15b) in der ersten Richtung (x) und zum Aufnehmen von quer zu der ersten Richtung (x) auf das Transportelement (15a, 15b) wirkenden Kräften aufweist,
wobei die Führungsstruktur an zumindest einer Übergabestelle (23) entlang der Strecke (13) wenigstens teilweise unterbrochen ist, sodass eine Bewegung des Transportelements (15a, 15b) in einer zu der ersten Richtung (x) orthogonalen zweiten Richtung (z) freigegeben ist und das Transportelement (15a, 15b) zur Übergabe von der Strecke (13) auf die Nebenstrecke (25) oder auf die Abstellschiene (27) in der zweiten Richtung (z) bewegbar ist,
**dadurch gekennzeichnet, dass**
die Führungsschiene (17) wenigstens eine Hauptführungsschiene (19) zum Aufnehmen von Kräften in der zweiten Richtung (z) mittels der Führungsstruktur und wenigstens eine Übergabeführungsschiene (21) zum Aufnehmen von Kräften in der zweiten Richtung (z) mittels der Führungsstruktur aufweist, wobei die Führungsstruktur der Hauptführungsschiene (19) an der Übergabestelle (23) unterbrochen ist,
wobei das Verfahren umfasst:
- Bewegen des Transportelements (15a, 15b) in der ersten Richtung (x) an die Übergabestelle (23) und
- Bewegen des Transportelements (15a, 15b) in der zweiten Richtung (z) zur Übergabe des Transportelements (15a, 15b) auf die Nebenstrecke (25) oder auf die Abstellschiene (27).

9. Verfahren nach Anspruch 8,
**dadurch gekennzeichnet, dass** das Transportelement (15a, 15b) in der zweiten Richtung (z) durch die Führungsschiene (17) und/oder die Linearmotoren (11) bewegt wird.

10. Verfahren nach Anspruch 8 oder 9,
**dadurch gekennzeichnet, dass** die Übergabeführungsschiene (21) zumindest an der Übergabestelle (23) in der zweiten Richtung (z) verfahrbar oder neigbar ist, wobei das Verfahren ferner umfasst, dass die Übergabeführungsschiene (21) zumindest an der Übergabestelle (23) zum Bewegen des Transportelements (15a, 15b) in der zweiten Richtung (z) verfahren oder geneigt wird.

11. Verfahren nach einem der Ansprüche 8 bis 10,
**dadurch gekennzeichnet, dass** das Transportelement (15a, 15b) nach der Bewegung in der zweiten Richtung (z) in der ersten Richtung (x) bewegt wird, um in Führungseingriff mit einer Nebenführungsschiene (29) der Nebenstrecke (25) oder mit der Abstellschiene (27) zu gelangen.

12. Verfahren nach Anspruch 11,
**dadurch gekennzeichnet, dass** die Nebenführungsschiene (29) eine in der zweiten Richtung (z) verfahrbare oder neigbare Aufnahmeführungsschiene (31) aufweist, wobei das Verfahren ferner das Verfahren oder Neigen der Aufnahmeführungsschiene (31) zum Übernehmen des Transportelements (15a, 15b) aufweist.

13. Verfahren nach einem der Ansprüche 8 bis 12,
**gekennzeichnet durch** das Positionieren der Abstellschiene (27) an der Übergabestelle (23) oder das Wegbewegen der Abstellschiene (27) von der Übergabestelle (23) weg, insbesondere mittels eines Greifarms.

## Claims

1. A transport system (10), in particular a multi-carrier system, comprising a plurality of linear motors (11), which are arranged in a row and have at least one guide rail (17) that defines a path (13), and
at least one transport element (15a, 15b) which can be moved by the linear motors (11) in a first direction (x) along the path (13),
wherein the guide rail (17) has a guide structure, which cooperates with the transport element (15a, 15b), for guiding the movement of the transport element (15a, 15b) in the first direction (x) and for absorbing forces acting on the transport element (15a, 15b) transversely to the first direction (x), and
that the guide structure is at least partly interrupted at at least one transfer point (23) along the path (13) so that a movement of the transport element (15a, 15b) is enabled in a second direction (z) orthogonal to the first direction (x) and the transport element (15a, 15b) can be moved in the second direction (z) by the guide rail (17) and/or the linear motors (11) for a transfer from the path (13) to a secondary path (25) or to a placement rail (27),
**characterized in that**
the guide rail (17) has at least one main guide rail (19) for absorbing forces in the second direction (z) by means of the guide structure and at least one transfer guide rail (21) for absorbing forces in the second direction (z) by means of the guide structure, with the guide structure of the main guide rail (19) being interrupted at the transfer point (23).

2. A transport system (10) according to claim 1,
**characterized in that** at least one of the main guide rail (19) and the transfer guide rail (21) is configured to absorb forces in a third direction (y), which is orthogonal to the first direction (x) and the second direction (z), by means of the guide structure.

3. A transport system (10) according to claim 1 or 2,
**characterized in that** the transfer guide rail (21) can be moved or inclined at least at the transfer point (23) for moving the transport element (15a, 15b) in the second direction (z).

4. A transport system (10) according to any one of the preceding claims, **characterized by** a secondary path (25), which is arranged at the transfer point (23) and defined by a secondary guide rail (29), or by a placement rail (27) which is suitable for being arranged at the transfer point (23).

5. A transport system (10) according to claim 4,
**characterized in that** the placement rail (27) is suitable for being positioned at the transfer point (23) or moved away from the transfer point (23), in particular by means of a gripper arm.

6. A transport system (10) according to claim 4 or 5,
**characterized in that** the secondary guide rail (29) has a pick-up guide rail (31) which can be moved or inclined in the second direction (z).

7. A transport system (10) according to any one of the preceding claims, **characterized in that** the transport element (15b) is provided with running elements (35) which cooperate with the guide structure, with all the running elements (35) being arranged at a side of the transport element (15b) facing the guide rail (17).

8. A method for transferring a transport element (15a, 15b) from a path (13) defined by a guide rail (17) of a transport system (10) to a secondary path (25) or to a placement rail (27),
wherein the transport system (10) has a plurality of linear motors (11), which are arranged in a row and comprise the guide rail (17), and the transport element (15a, 15b) which can be moved by the linear motors (11) in a first direction (x) along the path (13),
wherein the guide rail (17) has a guide structure, which cooperates with the transport element (15a, 15b), for guiding the movement of the transport element (15a, 15b) in the first direction (x) and for absorbing forces acting on the transport element (15a, 15b) transversely to the first direction (x), wherein the guide structure is at least partly interrupted at at least one transfer point (23) along the path (13) so that a movement of the transport element (15a, 15b) in a second direction (z) orthogonal to the first direction (x) is enabled and the transport element (15a, 15b) can be moved in the second direction (z) for a transfer from the path (13) to the secondary path (25) or to the placement rail (27),
**characterized in that**
the guide rail (17) has at least one main guide rail (19) for absorbing forces in the second direction (z) by means of the guide structure and at least one transfer guide rail (21) for absorbing forces in the second direction (z) by means of the guide structure, with the guide structure of the main guide rail (19) being interrupted at the transfer point (23),
wherein the method comprises:
- moving the transport element (15a, 15b) in the first direction (x) to the transfer point (23), and
- moving the transport element (15a, 15b) in the second direction (z) to transfer the transport element (15a, 15b) to the secondary path (25) or to the placement rail (27).

9. A method according to claim 8,
**characterized in that** the transport element (15a, 15b) is moved in the second direction (z) by the guide rail (17) and/or the linear motors (11).

10. A method according to claim 8 or 9,
**characterized in that** the transfer guide rail (21) can be moved or inclined in the second direction (z) at least at the transfer point (23), wherein the method further comprises that the transfer guide rail (21) is moved or inclined at least at the transfer point (23) for moving the transport element (15a, 15b) in the second direction (z).

11. A method according to any one of the claims 8 to 10,
**characterized in that** the transport element (15a, 15b) is moved in the first direction (x) after the movement in the second direction (z) in order to enter into guiding engagement with a secondary guide rail (29) of the secondary path (25) or with the placement rail (27).

12. A method according to claim 11,
**characterized in that** the secondary guide rail (29) has a pick-up guide rail (31) which can be moved or inclined in the second direction (z), with the method further comprising moving or inclining the pick-up guide rail (31) to take over the transport element (15a, 15b).

13. A method according to any one of the claims 8 to 12,
**characterized by** positioning the placement rail (27) at the transfer point (23) or moving the placement rail (27) away from the transfer point (23), in particular by means of a gripper arm.

## Revendications

1. Système de transport (10), en particulier système multi-chariots, comportant :
plusieurs moteurs linéaires (11) agencés en juxtaposition et comprenant au moins un rail de guidage (17) qui définit un trajet (13), et
au moins un élément de transport (15a, 15b) qui est déplaçable par les moteurs linéaires (11) dans une première direction (x) le long du trajet (13), le rail de guidage (17) comportant une structure de guidage qui coopère avec l'élément de transport (15a, 15b) et qui est destinée à guider le mouvement de l'élément de transport (15a, 15b) dans la première direction (x) et à absorber les forces agissant sur l'élément de transport (15a, 15b) transversalement à la première direction (x), et
la structure de guidage étant au moins partiellement interrompue au niveau d'au moins un point de transfert (23) le long du trajet (13), de manière à autoriser un mouvement de l'élément de transport (15a, 15b) dans une deuxième direction (z) orthogonale à la première direction (x) et à permettre à l'élément de transport (15a, 15b) d'être déplacé dans la deuxième direction (z) par le rail de guidage (17) et/ou par les moteurs linéaires (11) en vue du transfert depuis le trajet (13) vers un trajet auxiliaire (25) ou vers un rail de stationnement (27),
**caractérisé en ce que** le rail de guidage (17) comprend au moins un rail de guidage principal (19), destiné à absorber les forces dans la deuxième direction (z) au moyen de la structure de guidage, et au moins un rail de guidage de transfert (21), destiné à absorber les forces dans la deuxième direction (z) au moyen de la structure de guidage, la structure de guidage du rail de guidage principal (19) étant interrompue au niveau du point de transfert (23).

2. Système de transport (10) selon la revendication 1,
**caractérisé en ce que** l'un au moins parmi le rail de guidage principal (19) et le rail de guidage de transfert (21) est conçu pour absorber, au moyen de la structure de guidage, les forces dans une troisième direction (y) orthogonale à la première direction (x) et à la deuxième direction (z).

3. Système de transport (10) selon la revendication 1 ou 2,
**caractérisé en ce que** le rail de guidage de transfert (21) est mobile ou inclinable au moins au point de transfert (23) afin de déplacer l'élément de transport (15a, 15b) dans la deuxième direction (z).

4. Système de transport (10) selon l'une des revendications précédentes, **caractérisé par** un trajet auxiliaire (25), disposé au niveau du point de transfert (23) et défini par un rail de guidage auxiliaire (29), ou par un rail de stationnement (27) apte à être disposé au niveau du point de transfert (23).

5. Système de transport (10) selon la revendication 4,
**caractérisé en ce que** le rail de stationnement (27) est apte à être positionné au niveau du point de transfert (23) ou à être éloigné du point de transfert (23), en particulier au moyen d'un bras de préhension.

6. Système de transport (10) selon la revendication 4 ou 5,
**caractérisé en ce que** le rail de guidage auxiliaire (29) comporte un rail de guidage de réception (31) mobile ou inclinable dans la deuxième direction (z).

7. Système de transport (10) selon l'une des revendications précédentes, **caractérisé en ce que** l'élément de transport (15b) est muni d'éléments de roulement (35) qui coopèrent avec la structure de guidage, tous les éléments de roulement (35) étant disposés sur un côté de l'élément de transport (15b) tourné vers le rail de guidage (17).

8. Procédé de transfert d'un élément de transport (15a, 15b) depuis un trajet (13), défini par un rail de guidage (17) d'un système de transport (10), vers un trajet auxiliaire (25) ou vers un rail de stationnement (27),
dans lequel
le système de transport (10) comporte plusieurs moteurs linéaires (11), agencés en juxtaposition et comprenant le rail de guidage (17), et comporte l'élément de transport (15a, 15b) qui est déplaçable par les moteurs linéaires (11) dans une première direction (x) le long du trajet (13),
le rail de guidage (17) comporte une structure de guidage qui coopère avec l'élément de transport (15a, 15b) et qui est destinée à guider le mouvement de l'élément de transport (15a, 15b) dans la première direction (x) et à absorber les forces agissant sur l'élément de transport (15a, 15b) transversalement à la première direction (x),
la structure de guidage est au moins partiellement interrompue au niveau d'au moins un point de transfert (23) le long du trajet (13), de manière à autoriser un mouvement de l'élément de transport (15a, 15b) dans une deuxième direction (z) orthogonale à la première direction (x) et à permettre à l'élément de transport (15a, 15b) d'être déplacé dans la deuxième direction (z) en vue du transfert depuis le trajet (13) vers le trajet auxiliaire (25) ou vers le rail de stationnement (27),
**caractérisé en ce que**
le rail de guidage (17) comprend au moins un rail de guidage principal (19), destiné à absorber les forces dans la deuxième direction (z) au moyen de la structure de guidage, et au moins un rail de guidage de transfert (21), destiné à absorber les forces dans la deuxième direction (z) au moyen de la structure de guidage, la structure de guidage du rail de guidage principal (19) étant interrompue au niveau du point de transfert (23).
le procédé consistant à :
- déplacer l'élément de transport (15a, 15b) dans la première direction (x) vers le point de transfert (23), et
- déplacer l'élément de transport (15a, 15b) dans la deuxième direction (z) en vue du transfert de l'élément de transport (15a, 15b) vers le trajet auxiliaire (25) ou vers le rail de stationnement (27).

9. Procédé selon la revendication 8,
**caractérisé en ce que** l'élément de transport (15a, 15b) est déplacé dans la deuxième direction (z) par le rail de guidage (17) et/ou par les moteurs linéaires (11).

10. Procédé selon la revendication 8 ou 9,
**caractérisé en ce que** le rail de guidage de transfert (21) est mobile ou inclinable dans la deuxième direction (z) au moins au niveau du point de transfert (23), le procédé consistant en outre à déplacer ou à incliner le rail de guidage de transfert (21) au moins au niveau du point de transfert (23), afin de déplacer l'élément de transport (15a, 15b) dans la deuxième direction (z).

11. Procédé selon l'une des revendications 8 à 10,
**caractérisé en ce que** l'élément de transport (15a, 15b), une fois déplacé dans la deuxième direction (z), est déplacé dans la première direction (x) afin de venir en prise de guidage avec un rail de guidage auxiliaire (29) du trajet auxiliaire (25) ou avec le rail de stationnement (27).

12. Procédé selon la revendication 11,
**caractérisé en ce que** le rail de guidage auxiliaire (29) comporte un rail de guidage de réception (31) mobile ou inclinable dans la deuxième direction (z), le procédé consistant en outre à déplacer ou à incliner le rail de guidage de réception (31) afin de reprendre l'élément de transport (15a, 15b).

13. Procédé selon l'une des revendications 8 à 12,
**caractérisé par** le positionnement du rail de stationnement (27) au niveau du point de transfert (23) ou par l'éloignement du rail de stationnement (27) du point de transfert (23), en particulier au moyen d'un bras de préhension.
